# EUROPÄISCHE PATENTSCHRIFT

(11) **EP 3 966 124 B1**
(45) Veröffentlichungstag und Bekanntmachung des Hinweises auf die Patenterteilung: **17.07.2024**
(21) Anmeldenummer: 20715843.7
(22) Anmeldetag: 30.03.2020
(51) Int. Cl.: B65D 19/18, B65D 25/06

(54) **TRANSPORTCONTAINER**
TRANSPORT CONTAINER
CONTENEUR DE TRANSPORT

(30) Priorität: 08.05.2019 DE 102019206637
(43) Veröffentlichungstag der Anmeldung: 16.03.2022
(73) Patentinhaber: Söhner Kunststofftechnik GmbH Präzisionsthermoformen, 74193 Schwaigern (DE)
(72) Erfinder: DUNZ, Thomas, 74360 Ilsfeld (DE)
(74) Vertreter: Patentanwälte Ruff, Wilhelm, Beier, Dauster & Partner mbB
(86) Internationale Anmeldenummer: PCT/EP2020/058912
(87) Internationale Veröffentlichungsnummer: WO 2020/224870

(56) Entgegenhaltungen:
- DE-A1- 102005 008 696
- DE-U1- 20 001 147
- DE-U1- 202010 002 290
- DE-U1- 9 312 829
- DE-U1- 9 417 336
- JP-A- 2015 151 136
- US-A1- 2004 129 699

## Beschreibung

Die Erfindung betrifft einen Transportcontainer mit einem Palettenboden und einem Faltwandungsring, der zwischen einem flach zusammengefalteten Faltzustand und einem aufgefalteten Funktionszustand überführbar ist, in dem der Faltwandungsring unter Ausbildung eines von Seitenwänden umgrenzten Containervolumens auf dem Palettenboden abgestützt ist, und mit wenigstens einem Zwischenboden, der zur Untergliederung des Containervolumens an einander gegenüberliegenden Seitenwänden des Faltwandungsrings lösbar befestigt ist.

Ein derartiger Transportcontainer ist aus der DE 10 2005 008 696 A1 bekannt und als Mehrwegbehälter vorgesehen. Der Transportcontainer weist einen Palettenboden und einen als Behälterteil bezeichneten Faltwandungsring auf. Der Faltwandungsring ist zwischen einem flach zusammengefalteten Faltzustand und einem aufgefalteten Funktionszustand überführbar. Im Funktionszustand ist der Faltwandungsring unter Ausbildung eines von Seitenwänden umgrenzten Containervolumens auf dem Palettenboden abgestützt. Zudem weist der bekannte Transportcontainer einen Zwischenboden auf, der zur Untergliederung des Containervolumens vorgesehen ist. Zur Abstützung des Zwischenbodens weist der Faltwandungsring Einrichtungen auf, die zur Bildung von Konsolen zur Auflage des Zwischenbodens vorgesehen sind. Diese Einrichtungen sind jeweils in Form eines verschwenkbar gelagerten Bügels an den Seitenwänden angebracht. Zur Auflage des Zwischenbodens müssen die Bügel manuell ausgeklappt werden.

Aufgabe der Erfindung ist es, einen Transportcontainer der eingangs genannten Art zu schaffen, der einen vereinfachten Aufbau aufweist und eine vereinfachte Handhabung ermöglicht.

Diese Aufgabe wird dadurch gelöst, dass der wenigstens eine Zwischenboden mittels eines Twinsheet-Verfahrens aus einem tiefziehfähigen Kunststoffwerkstoff einstückig hergestellt ist und mehrere angeformte Befestigungselemente aufweist, die zur Befestigung des Zwischenbodens in an den Seitenwänden ausgebildete Befestigungsaussparungen eingreifen. Durch die erfindungsgemäße Lösung kann insbesondere auf gesonderte und manuell zu bedienende Einrichtungen zur Befestigung des Zwischenbodens verzichtet werden. Zu diesem Zweck sind erfindungsgemäß die Befestigungsaussparungen an den Seitenwänden ausgebildet und die Befestigungselemente sind an den Zwischenboden angeformt, wobei der gesamte Zwischenboden einstückig mittels des Twinsheet-Verfahrens hergestellt ist. Folglich sind die Befestigungselemente jeweils einstückig mit dem restlichen Zwischenboden ausgebildet. Durch die erfindungsgemäße Lösung wird einhergehend mit dem vereinfachten Aufbau ein Recycling des Zwischenbodens erleichtert, da dieser insgesamt aus dem Kunststoffwerkstoff hergestellt ist. Hierdurch kann auf ein aufwändiges Trennen unterschiedlicher Werkstoffe beim Recycling des Zwischenbodens verzichtet werden. Vorzugsweise ist auch der Faltwandungsring mittels eines Twinsheet-Verfahrens aus einem tiefziehfähigen Kunststoffwerkstoff hergestellt. Twinsheet-Verfahren sind im Bereich der Kunststofftechnik als solche grundsätzlich bekannt, so dass auf Einzelheiten hierzu an dieser Stelle nicht eingegangen werden braucht. Der Faltwandungsring weist wenigstens vier miteinander verbundene Seitenwandungsabschnitte auf, die im Faltzustand flach aufeinandergefaltet angeordnet sind. Im Funktionszustand sind die Seitenwandungsabschnitte demgegenüber aufgefaltet und bilden im Wesentlichen rechtwinklig zueinander angeordnete Seitenwände des Containervolumens aus. Dabei sind die Seitenwände im Funktionszustand vertikal ausgerichtet und einends stirnseitig auf dem Palettenboden abgestützt. Vorzugsweise weist der Zwischenboden einen mehrschaligen Aufbau mit wenigstens einer Innenschale und einer Außenschale auf. Entsprechendes gilt vorzugsweise auch für den Faltwandungsring. Mittels des Zwischenbodens kann das Containervolumen vorzugsweise in seiner Hochrichtung untergliedert werden. Dabei erstreckt sich der Zwischenboden nicht zwingend über eine gesamte Länge und/oder Breite des Containervolumens. Beispielsweise kann der Zwischenboden nur über einen Teil der Länge und/oder Breite des Containervolumens erstreckt sein und auf diese Weise lediglich einen Teilbereich des Containervolumens untergliedern. Der Zwischenboden weist vorzugsweise eine rechteckige Grundfläche auf. Vorzugsweise bilden die Befestigungselemente jeweils einen seitlich auskragenden Vorsprung, der im lösbar befestigten Zustand formschlüssig mit der jeweiligen Befestigungsaussparung zusammenwirkt. Die Befestigungsaussparungen können jeweils insbesondere als Einsenkung, Öffnung oder Vertiefung in die jeweilige Seitenwand eingebracht sein.

In Ausgestaltung der Erfindung sind an einander gegenüberliegenden Seitenkanten des Zwischenbodens jeweils zwei Befestigungselemente ausgebildet. Es hat sich gezeigt, dass durch diese Ausgestaltung der Erfindung unter Aufrechterhaltung des einfachen Aufbaus eine hinreichend beanspruchbare Befestigung des Zwischenbodens gewährleistet werden kann. Entsprechend der Anzahl der Befestigungselemente sind vorzugsweise jeweils wenigstens zwei Befestigungsaussparungen an den gegenüberliegenden Seitenwänden ausgebildet.

In weiterer Ausgestaltung der Erfindung sind die Befestigungsaussparungen jeweils an einem in die jeweilige Seitenwand eingesenkten Konsolenabschnitt angeordnet und in etwa vertikal in die jeweilige Seitenwand erstreckt. Durch diese Ausgestaltung der Erfindung kann eine besonders belastbare Befestigung des Zwischenbodens bei gleichzeitig einfachem Aufbau erreicht werden. Die Konsolenabschnitte sind jeweils in Dickenrichtung der jeweiligen Seitenwand in dieselbe eingesenkt. Bei im Funktionszustand in etwa vertikal orientierten Seitenwänden ergibt sich hierbei eine in etwa horizontale Einsenkung der Konsolenabschnitte. Die Befestigungsaussparungen sind in etwa senkrecht zur Einsenktiefe und somit - jedenfalls im Funktionszustand - in etwa vertikal in die jeweilige Seitenwand erstreckt. Vorzugsweise sind mehrere in Hochrichtung des Containervolumens übereinander angeordnete Konsolenabschnitte vorgesehen, so dass ein- und derselbe Zwischenboden bei Bedarf auf unterschiedlichen Höhen des Containervolumens lösbar befestigt werden kann. Alternativ oder zusätzlich können hierdurch mehrere Zwischenböden übereinander beabstandet angeordnet werden.

In weiterer Ausgestaltung der Erfindung sind die Konsolenabschnitte jeweils mit einer über einer Höhe des Containervolumens von oben nach unten zunehmenden Einsenktiefe in die jeweilige Seitenwand eingesenkt. Durch diese Ausgestaltung der Erfindung wird einem ungewollten Verhaken oder Verkanten des Zwischenbodens an den Seitenwänden entgegengewirkt. Dies erleichtert das Einlegen und Herausnehmen des Zwischenbodens.

In weiterer Ausgestaltung der Erfindung weisen die Befestigungselemente jeweils einen Stützabschnitt und einen Hakenabschnitt auf, wobei der Stützabschnitt auf einem Stützrand des jeweiligen Konsolenabschnitts abgestützt ist, und wobei der Hakenabschnitt formschlüssig in die jeweilige Befestigungsaussparung eingreift. Hierdurch wird eine besonders zuverlässige und beanspruchbare Befestigung bei gleichzeitig einfacher Lösbarkeit des Zwischenbodens ermöglicht. Der Stützabschnitt und der Stützrand sind vorzugsweise jeweils durch horizontal erstreckte Wandabschnitte des Befestigungselements bzw. der jeweiligen Seitenwand gebildet. In lösbar befestigtem Zustand des Zwischenbodens ist der Stützabschnitt vertikal auf dem Stützrand abgestützt. Der Hakenabschnitt greift formschlüssig in die jeweilige Befestigungsaussparung ein. Vorzugsweise hintergreift der Hakenabschnitt die jeweilige Befestigungsaussparung.

In weiterer Ausgestaltung der Erfindung weist der Zwischenboden wenigstens eine Griffaussparung auf. Die Griffaussparung dient einem vereinfachten manuellen Einlegen und Herausnehmen des Zwischenbodens. Die Griffaussparung ist in Dickenrichtung des Zwischenbodens durch denselben erstreckt und derart bemessen, dass wenigstens ein Finger einer Hand, vorzugsweise mehrere Finger einer Hand, durch die Griffaussparung in und/oder durch den Zwischenboden gesteckt werden können. Vorzugsweise sind zwei Griffaussparungen vorgesehen, so dass der Zwischenboden auf vorteilhafte Weise beidhändig an den Griffaussparungen gegriffen werden kann.

In weiterer Ausgestaltung der Erfindung ist der Zwischenboden mit einem zur Verstärkung vorgesehenen Einlegeteil versehen. Das Einlegeteil kann ein- oder mehrteilig gestaltet und insbesondere aus Metall oder verstärktem Kunststoff gefertigt sein. Vorzugsweise ist das Einlegeteil in Form eines Rahmens ausgebildet. Der Zwischenboden ist vorzugsweise insbesondere im Bereich der Befestigungselemente mittels des Einlegeteils verstärkt. Diese Ausgestaltung der Erfindung ermöglicht eine nochmals erhöhte Beanspruchung des Zwischenbodens.

In weiterer Ausgestaltung der Erfindung weist der Zwischenboden einen mehrschaligen Aufbau mit einer Innenschale und einer Außenschale auf, wobei das Einlegeteil zwischen der Innenschale und der Außenschale angeordnet in den Zwischenboden integriert ist. Die Außenschale bildet eine Oberseite des Zwischenbodens. Die Innenschale bildet eine Unterseite des Zwischenbodens. Das Einlegeteil ist vorzugsweise in Hochrichtung des Containervolumens bzw. in Dickenrichtung des Zwischenbodens zwischen der Innenschale und der Außenschale angeordnet. Das Einlegeteil kann auf diese Weise verliersicher zwischen der Innenschale und der Außenschale festgelegt sein, so dass auf eine gesonderte Befestigung des Einlegeteils an dem Zwischenboden verzichtet werden kann. Hierdurch wird ein nochmals vereinfachter Aufbau erreicht.

In weiterer Ausgestaltung der Erfindung sind mehrere in Längsrichtung des Containervolumens auf gleicher Höhe fluchtend nebeneinander angeordnete Zwischenböden vorgesehen. Die Zwischenböden sind vorzugsweise gleichartig, besonders bevorzugt identisch zueinander, gestaltet. Diese Ausgestaltung der Erfindung eignet sich besonders bei im Vergleich zu den Abmessungen der Zwischenböden besonders groß dimensionierten Containervolumen. Hierdurch kann dennoch eine einfache manuelle Handhabung der einzelnen Zwischenböden gewährleistet werden. Bei einem einzelnen, über die gesamte Länge und/oder Breite des Containervolumens erstreckten Zwischenboden kann dies aufgrund der resultierenden Abmessungen und/oder des damit einhergehenden Gewichts des Zwischenbodens nicht ohne weiteres gewährleistet werden.

Weitere Vorteile und Merkmale der Erfindung ergeben sich aus den Ansprüchen sowie aus der nachfolgenden Beschreibung eines bevorzugten Ausführungsbeispiels der Erfindung, das anhand der Zeichnungen dargestellt ist.
- Fig. 1: zeigt in schematischer Perspektivdarstellung eine Ausführungsform eines erfindungsgemäßen Transportcontainers, der eine Ausführungsform eines erfindungsgemäßen Zwischenbodens aufweist,
- Fig. 2: den Transportcontainer in einer Fig. 1 entsprechenden Ansicht unter zeichnerischer Ausblendung einzelner Bauteile und/oder Abschnitte, wobei der Blick auf den Zwischenboden freigegeben ist,
- Fig. 3: eine schematische Perspektivdarstellung des Zwischenbodens unter zeichnerischer Einblendung verdeckter Sichtkanten,
- Fig. 4: in abgeschnittener und vergrößerter Detaildarstellung den Transportcontainer nach den Fig. 1 und 2 in einer Fig. 2 entsprechenden Ansicht mit schräger Blickrichtung auf eine Seitenwand, an der der Zwischenboden lösbar befestigt ist,
- Fig. 5: in einer teilweise in Querrichtung geschnittenen Ansicht einen Faltwandungsring des Transportcontainers nach den Fig. 1 und 2 zusammen mit dem Zwischenboden,
- Fig. 6: in teilweise abgeschnittener vergrößerter Detaildarstellung einen Bereich N der Ansicht gemäß Fig. 5 und
- Fig. 7: in abgeschnittener vergrößerter Detaildarstellung den Zwischenboden nach Fig. 3 in einer in Längsrichtung orientierten und auf ein Befestigungselement gerichteten Blickrichtung zusammen mit einem Abschnitt einer Seitenwand des Faltwandungsringes.

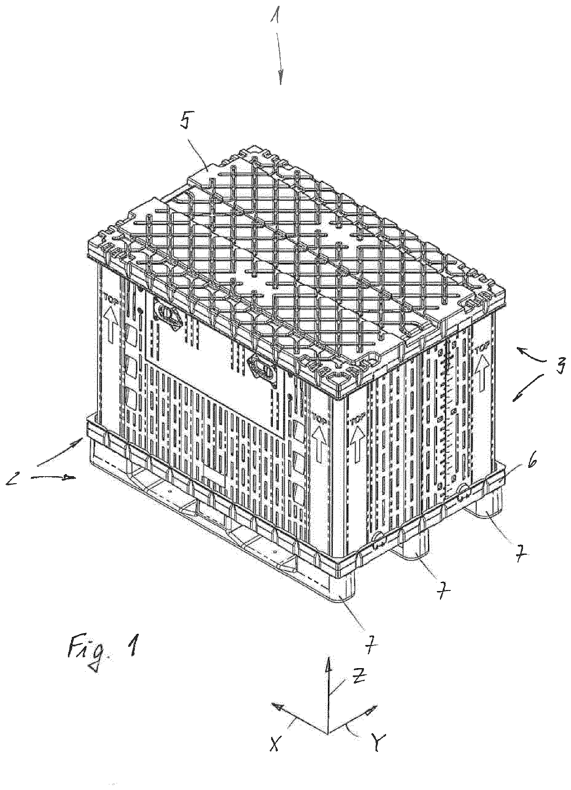

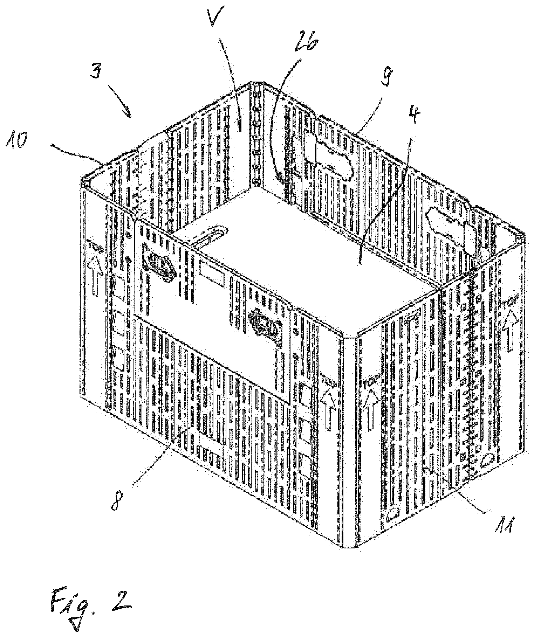

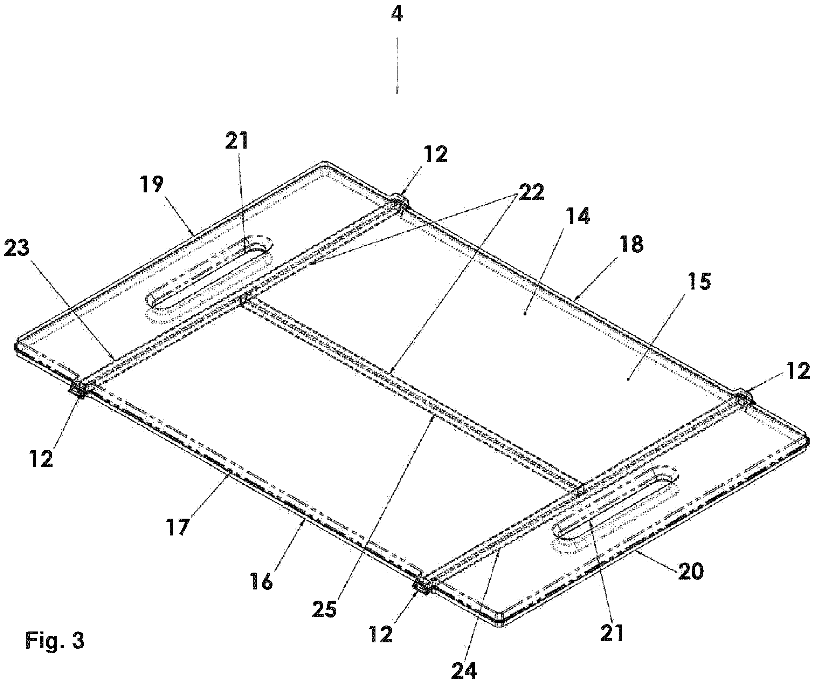

Ein Transportcontainer 1 nach Fig. 1 weist einen Palettenboden 2, einen Faltwandungsring 3, einen Zwischenboden 4 (Fig. 2, 3) und ein Deckelteil 5 auf.

Der Palettenboden 2 weist eine anhand Fig. 1 nicht näher ersichtliche Bodenplatte auf, die eine rechteckige Grundform aufweist und mit einem außenseitig umlaufenden Stützrand 6 versehen ist. Der Stützrand 6 ragt in Hochrichtung Z des Transportcontainers 1 nach oben von der Bodenplatte ab. Weiter weist der Palettenboden 2 vorliegend drei an einer Unterseite der Bodenplatte angeordnete Fußteile 7 auf. Die Fußteile sind vorliegend jeweils in Form eines in Längsrichtung X des Transportcontainers 1 erstreckten Kufenteils 7 ausgebildet.

Der Faltwandungsring 3 ist zwischen einem flach zusammengefalteten Faltzustand und einem aufgefalteten Funktionszustand überführbar. In der anhand der Fig. 1 und 2 ersichtlichen Konfiguration ist der Faltwandungsring 3 in seinem Funktionszustand dargestellt und hierbei unter Ausbildung eines von Seitenwänden 8, 9, 10, 11 umgrenzten Containervolumens V auf dem Palettenboden 2 abgestützt. An seinem dem Palettenboden 2 zugewandten Stirnende ist der Faltwandungsring 3 auf grundsätzlich bekannte Weise im Bereich des Stützrands 6 am Palettenboden 2 festgelegt.

Vorliegend weist der Faltwandungsring 3 vier Seitenwände auf, die im Funktionszustand einen im Querschnitt rechteckigen, geschlossenen Ring bilden und nachfolgend unter Bezugnahme auf das anhand Fig. 1 ersichtliche Bezugssystem X, Y, Z als linke Seitenwand 8, rechte Seitenwand 9, vordere Seitenwand 10 und hintere Seitenwand 11 bezeichnet werden. Der Faltwandungsring 3 weist mehrere gelenkige oder scharnierbewegliche nicht näher bezeichnete Abschnitte auf, mittels derer die Seitenwände 8, 9, 10, 11 zum Überführen des Faltwandungsrings 3 zwischen dem Faltzustand und dem Funktionszustand faltbar miteinander verbunden sind.

Der Faltwandungsring 3 ist bei der gezeigten Ausführungsform mittels eines Twinsheet-Verfahrens aus einem tiefziehfähigen Kunststoffwerkstoff hergestellt und weist insoweit einen mehrschaligen Aufbau mit einer - im Funktionszustand - dem Containervolumen V zugewandten nicht näher bezeichneten Innenschale und einer dem Containervolumen V abgewandten Außenschale auf. Twinsheet-Verfahren sind im Bereich der Kunststofftechnik als solche grundsätzlich bekannt. Die Innenschale und die Außenschale werden bei dieser Art der Herstellung auf grundsätzlich bekannte Weise abschnittsweise miteinander zusammengefügt, so dass sich entsprechende formstabile Abschnitte, Einformungen, Ausformungen, Versteifungsrippen sowie die bereits erwähnten gelenkigen oder scharnierbeweglichen Abschnitte ergeben können.

Im Funktionszustand sind die Seitenwände 8, 9, 10, 11 jeweils in Hochrichtung Z vertikal erstreckt. Demgegenüber sind die Seitenwände 8, 9, 10, 11 im Faltzustand, der zeichnerisch nicht dargestellt ist, unter Ausbildung einer plattenförmigen Konfiguration flach aufeinandergelegt und zum platzsparenden Umschlag des Transportcontainers 1 im entleerten Zustand horizontal liegend auf die Oberseite des Palettenbodens 2 auflegbar.

Das bei der vorliegenden Ausführungsform vorhandene Deckelteil 5 ist im Funktionszustand zum Verschließen des Containervolumens V auf den Faltwandungsring 3 aufgelegt und hierzu auf nicht näher dargestellte Weise in Hochrichtung Z auf einen jeweiligen stirnendseitigen Bereich der Seitenwände 8, 9, 10, 11 aufgesteckt. Das Deckelteil 5 weist eine rechteckige und mit der Grundform des Palettenbodens 2 übereinstimmende Grundform auf. Im Faltzustand des Faltwandungsrings 3 kann das Deckelteil 5 auf eine Oberseite des Stützrands 6 aufgebracht werden, so dass der zusammengefaltete Faltwandungsring 3 in dem dann zwischen dem Deckelteil 5 und der Bodenplatte des Palettenbodens 2 gebildeten Zwischenraum festgelegt ist.

Wie weiter anhand Fig. 2 ersichtlich ist, dient der Zwischenboden 4 einer Untergliederung des Containervolumens V. Bei der gezeigten Ausführungsform ist das Containervolumen V mittels des Zwischenbodens 4 in Hochrichtung Z untergliedert, genauer zweigeteilt, was jedoch nicht zwingend ist.

Bei einer nicht dargestellten Ausführungsform kann eine Untergliederung des Containervolumens V in Längsrichtung X oder in Querrichtung Y vorgesehen sein.

Der Zwischenboden 4 ist an einander gegenüberliegenden Seitenwänden 8, 9 und/oder 10, 11 des Faltwandungsrings 3 lösbar befestigt, wobei vorliegend eine lösbare Befestigung an den gegenüberliegenden Seitenwänden 8, 9 vorgesehen ist. Weitere Details des Zwischenbodens sind insbesondere anhand Fig. 3 ersichtlich.

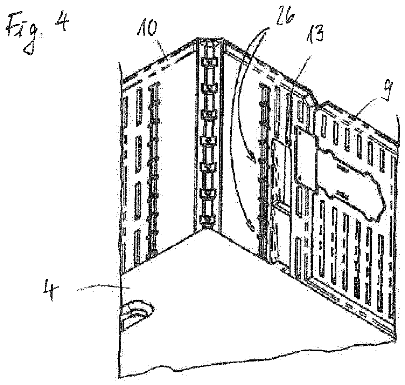

Der Zwischenboden 4 ist mittels eines Twinsheet-Verfahrens aus einem tiefziehfähigen Kunststoffwerkstoff einstückig hergestellt und weist mehrere angeformte Befestigungselemente 12 auf, die zur Befestigung des Zwischenbodens 4 in an den Seitenwänden 8, 9 ausgebildete Befestigungsaussparungen 13 (Fig. 4, 6, 7) eingreifen.

Wie bereits dargelegt, sind Twinsheet-Verfahren im Bereich der Kunststofftechnik grundsätzlich bekannt, so dass sich weitere Ausführungen zu den Eigenschaften und der Umsetzung dieses Verfahrens vorliegend erübrigen.

Der Zwischenboden 4 weist bei der dargestellten Ausführungsform eine rechteckige Grundform und insoweit einen rechteckigen Grundabschnitt 14 auf, von dem die Befestigungselemente 12 jeweils entlang der Querrichtung Y seitlich abragen. Im Verhältnis zu seinen Abmessungen in X- und Y-Richtung ist der Zwischenboden 4 vorliegend flach bzw. dünn gestaltet. Zudem weist der Zwischenboden 4 aufgrund der Herstellung mittels des besagten Twinsheet-Verfahrens vorliegend einen mehrschaligen Aufbau mit einer Innenschale 15 und einer Außenschale 16 auf, wobei die Innenschale 15 vorliegend eine Oberseite des Zwischenbodens 4 bildet. Die Außenschale 16 bildet demgegenüber eine Unterseite des Zwischenbodens 4. Bei der Twinsheet-Herstellung werden die Innenschale 15 und die Außenschale 16 auf grundsätzlich bekannte Weise abschnittsweise miteinander zusammengefügt, so dass sich entsprechende formstabile Abschnitte, Einformungen, Ausformungen sowie Versteifungsrippen ergeben können. Bei der gezeigten Ausführungsform ist der Zwischenboden 4 jedenfalls an seiner durch die Innenschale 15 gebildeten Oberseite eben und glattwandig gestaltet. Die Befestigungselemente 12 sind einstückig an den Grundabschnitt 14 angeformt und jeweils unmittelbar bei der Twinsheet-Herstellung ausgebildet.

Vorliegend sind insgesamt vier Befestigungselemente 12 vorgesehen, wobei jeweils zwei der Befestigungselemente 12 an einander gegenüberliegenden Seitenkanten 17, 18 des Zwischenbodens 4 ausgebildet sind. Die Seitenkanten werden im Weiteren als linke Seitenkante 17 und als rechte Seitenkante 18 bezeichnet, wobei die linke Seitenkante 17 der linken Seitenwand 8 und die rechte Seitenkante 18 der rechten Seitenwand 9 des Faltwandungsrings 3 zugeordnet ist. Die Seitenkanten 17, 18 sind jeweils in Längsrichtung X und parallel zueinander erstreckt. In Längsrichtung X stirnendseitig weist der Zwischenboden 4 eine vordere Querkante 19 und eine hintere Querkante 20 auf. Dabei sind die Befestigungselemente 12 in Längsrichtung X von einer gedachten Mittel-Querebene des Zwischenbodens 4 in Richtung der Querkanten 19 und 20 versetzt. Die Querkanten 19, 20 sind in Querrichtung Y und parallel zueinander erstreckt.

Zur leichteren Handhabung des Zwischenbodens 4 weist dieser vorliegend zwei Griffaussparungen 21 auf, die in Hochrichtung Z durch den Grundabschnitt 14 erstreckt und jeweils in Form eines Langlochs ausgebildet sind.

Wie weiter anhand Fig. 3 ersichtlich ist, ist der Zwischenboden 4 vorliegend mit einem Einlegeteil 22 versehen, das einer mechanischen Verstärkung des Zwischenbodens 4 dient. Das Einlegeteil 22 kann aus Metall oder einem verstärkten Kunststoff gefertigt und ein- oder mehrteilig gestaltet sein. Vorliegend ist das Einlegeteil 22 mehrteilig gestaltet und aus Metall gefertigt. Das Einlegeteil 22 ist hierzu aus mehreren Profilabschnitten 23, 24, 25 zu einem Profilrahmen mit einer H-förmigen Grundform zusammengesetzt. Die Profilabschnitte 23, 24 sind in Querrichtung Y erstreckt und bilden daher Querprofilabschnitte 23, 24. Der Profilabschnitt 25 ist demgegenüber in Längsrichtung X erstreckt und bildet daher einen Längsprofilabschnitt 25. Die Querprofilabschnitte 23, 24 sind in Bezug auf die Längsrichtung X jeweils in Höhe der einander gegenüberliegenden Befestigungselemente 12 angeordnet und in Querrichtung Y durchgängig zwischen diesen erstreckt. Der Längsprofilabschnitt 25 ist in Bezug auf die Querrichtung Y mittig der Querprofilabschnitte 23, 24 angeordnet und mittels eines geeigneten Fügeverfahrens unlösbar mit diesen zusammengefügt. Vorliegend sind die Profilabschnitte 23, 24, 25 miteinander verschweißt, was jedoch nicht zwingend der Fall sein muss.

Das Einlegeteil 22 ist vorliegend in den Zwischenboden 4 integriert und hierzu in Hochrichtung Z zwischen der Innenschale 15 und der Außenschale 16 angeordnet. Auf diese Weise ist das Einlegeteil 22 fest und unverlierbar in den mehrschaligen Aufbau des Zwischenbodens 4 integriert.

Anhand Fig. 3 ist zudem gezeigt, dass der Zwischenboden 4 mitsamt dem Einlegeteil 22 bei der gezeigten Ausführungsform einen doppelt-symmetrischen Aufbau aufweist. Das heißt der Zwischenboden 4 ist vorliegend sowohl in Bezug auf eine gedachte Mittel-Längsebene als auch in Bezug auf eine Mittel-Querebene symmetrisch gestaltet. Entsprechendes gilt für das Einlegeteil 22.

Die Befestigungselemente 12 sind vorliegend identisch gestaltet, so dass nachfolgend zur Vermeidung von Wiederholungen in Bezug auf die spezifische Gestaltung lediglich auf eines der Befestigungselemente 12 näher eingegangen wird. Die diesbezügliche Offenbarung gilt in entsprechender Weise für die verbleibenden Befestigungselemente 12. Entsprechendes gilt hinsichtlich der Befestigungsaussparungen 13.

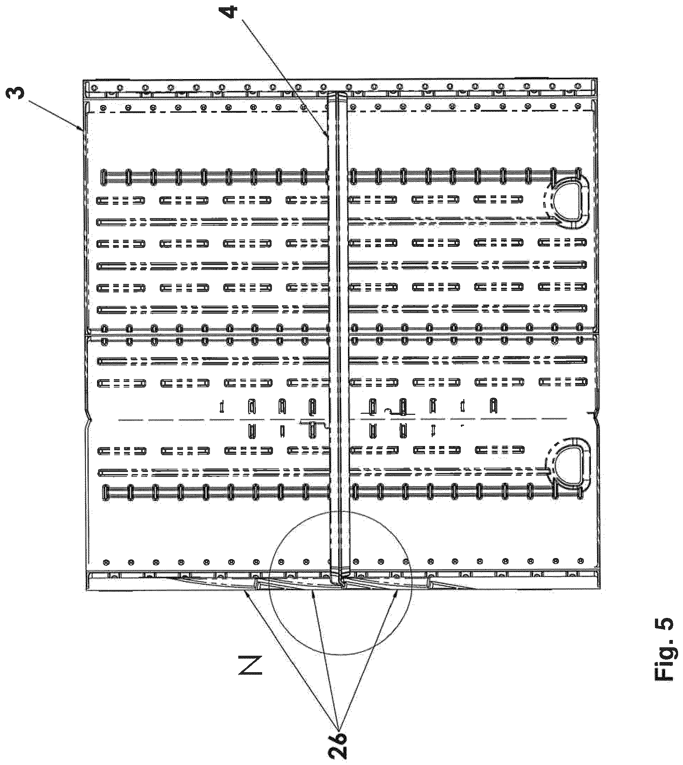

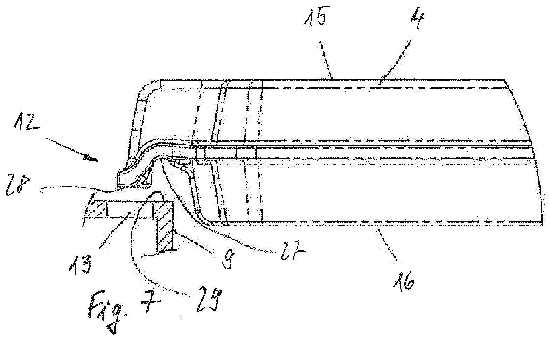

Die anhand Fig. 7 schematisch stark vereinfachte Befestigungsaussparung 13 ist an einem in die Seitenwand 9 eingesenkten Konsolenabschnitt 26 angeordnet und in etwa vertikal in die Seitenwand 9 erstreckt. Vorliegend sind mehrere in Hochrichtung Z übereinanderliegend angeordnete Konsolenabschnitte 26 mit jeweils einer Befestigungsaussparung 13 vorgesehen (Fig. 5). Hierdurch kann der Zwischenboden 4 in unterschiedlichen Höhenpositionen an dem Faltwandungsring 3 lösbar befestigt und das Containervolumen V demgemäß auf unterschiedliche Weise untergliedert werden. Selbstverständlich ist es auch möglich, dass in Bezug auf die Hochrichtung Z mehrere Zwischenböden 4 übereinanderliegend an den Konsolenabschnitten 26 bzw. den Befestigungsaussparungen 13 festgelegt werden.

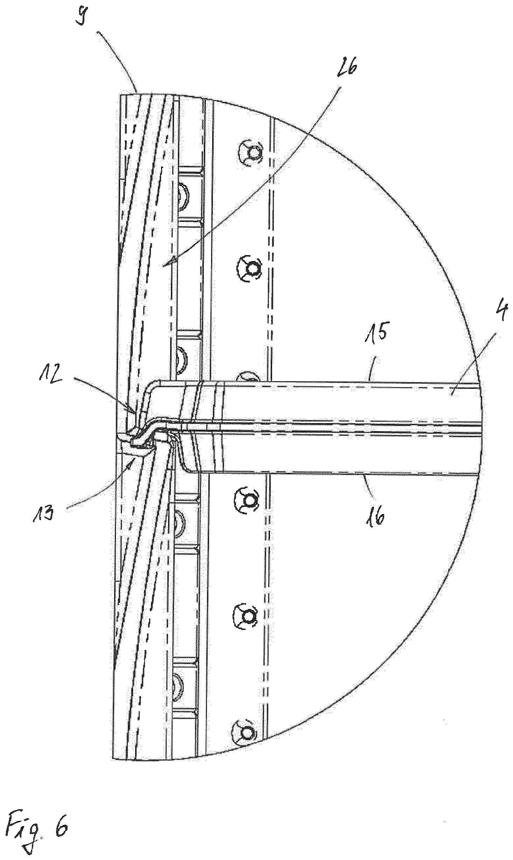

Die Konsolenabschnitte 26 sind bei der Twinsheet-Herstellung des Faltwandungsrings 3 in die betreffende Seitenwand 8, 9 eingeformt. Wie insbesondere anhand Fig. 6 ersichtlich ist, ist eine nicht näher bezeichnete und in Dickenrichtung der Seitenwand 9 erstreckte Einsenktiefe des Konsolenabschnitts 26 in Bezug auf die Hochrichtung Z veränderlich. Genauer nimmt die Einsenktiefe von oben nach unten zu. Hierdurch wird vermieden, dass sich der Zwischenboden 4 im Bereich der Befestigungselemente 12 ungewollt an den Seitenwänden 8, 9 verhakt. Dies erleichtert eine Entnahme und ein Einlegen des Zwischenbodens 4. Zudem wird hierdurch eine glatte Innenkontur der Seitenwände 8, 9 ohne etwaige in das Containervolumen V auskragende Vorsprünge ermöglicht.

Wie insbesondere anhand Fig. 7 ersichtlich ist, weist das Befestigungselement 12 bei der gezeigten Ausführungsform einen Stützabschnitt 27 und einen Hakenabschnitt 28 auf. Der Stützabschnitt 27 ist im lösbar befestigten Zustand des Zwischenbodens in Hochrichtung Z auf einem an die Befestigungsaussparung 13 angrenzenden Stützrand 29 des Konsolenabschnitts 26 abgestützt. Der in Bezug auf den Stützabschnitt 27 in Querrichtung Y außenliegende Hakenabschnitt 28 greift im lösbar befestigten Zustand des Zwischenbodens 4 formschlüssig in die Befestigungsaussparung 13 ein.

Bei dem gezeigten Ausführungsbeispiel ist lediglich ein Zwischenboden 4 vorgesehen. Selbstverständlich können auch mehrere Zwischenböden 4 vorgesehen sein. Bei einem zeichnerisch nicht dargestellten Ausführungsbeispiel sind mehrere in Längsrichtung X nebeneinander angeordnete gleichartige Zwischenböden 4 vorgesehen, die vorzugsweise auf gleicher Höhe fluchtend nebeneinander angeordnet sind. Bei diesem Ausführungsbeispiel weist der Faltwandungsring dementsprechend in Bezug auf die Längsrichtung X wenigstens vier zueinander beabstandet angeordnete Befestigungsaussparungen 13 auf. Eine solche Gestaltung ist insbesondere dann vorteilhaft, wenn eine manuelle Handhabung des Zwischenbodens 4 aufgrund der Abmessungen des zu untergliedernden Containervolumens durch die damit einhergehenden Abmessungen des Zwischenboden und/oder das damit einhergehende Gewicht erschwert werden würde. In einem solchen Fall ist es vorteilhaft, anstelle eines vergleichsweise großen und schweren Zwischenbodens mehrere kleinere Zwischenböden nebeneinanderliegend anzuordnen.

## Patentansprüche

1. Transportcontainer (1) mit einem Palettenboden (2) und einem Faltwandungsring (3), der zwischen einem flach zusammengefalteten Faltzustand und einem aufgefalteten Funktionszustand überführbar ist, in dem der Faltwandungsring (3) unter Ausbildung eines von Seitenwänden (8, 9, 10, 11) umgrenzten Containervolumens (V) auf dem Palettenboden (2) abgestützt ist, und mit wenigstens einem Zwischenboden (4), der zur Untergliederung des Containervolumens (V) an einander gegenüberliegenden Seitenwänden (8, 9) des Faltwandungsrings (3) lösbar befestigt ist, **dadurch gekennzeichnet, dass** der wenigstens eine Zwischenboden (4) mittels eines Twinsheet-Verfahrens aus einem tiefziehfähigen Kunststoffwerkstoff einstückig hergestellt ist und mehrere angeformte Befestigungselemente (12) aufweist, die zur Befestigung des Zwischenbodens (4) in an den Seitenwänden (8, 9) ausgebildete Befestigungsaussparungen (13) eingreifen.

2. Transportcontainer (1) nach Anspruch 1, **dadurch gekennzeichnet, dass** an einander gegenüberliegenden Seitenkanten (17, 18) des Zwischenbodens (4) jeweils zwei Befestigungselemente (12) ausgebildet sind.

3. Transportcontainer (1) nach Anspruch 1 oder 2, **dadurch gekennzeichnet, dass** die Befestigungsaussparungen (13) jeweils an einem in die jeweilige Seitenwand (8, 9) eingesenkten Konsolenabschnitt (26) angeordnet und in etwa vertikal in die jeweilige Seitenwand (8, 9) erstreckt sind.

4. Transportcontainer (1) nach Anspruch 3, **dadurch gekennzeichnet, dass** die Konsolenabschnitte (26) jeweils mit einer über einer Höhe des Containervolumens (V) von oben nach unten zunehmenden Einsenktiefe in die jeweilige Seitenwand (8, 9) eingesenkt sind.

5. Transportcontainer (1) nach Anspruch 3 oder 4, **dadurch gekennzeichnet, dass** die Befestigungselemente jeweils einen Stützabschnitt (27) und einen Hakenabschnitt (28) aufweisen, wobei der Stützabschnitt (27) auf einem Stützrand (29) des jeweiligen Konsolenabschnitts (26) abgestützt ist, und wobei der Hakenabschnitt (28) formschlüssig in die jeweilige Befestigungsaussparung (13) eingreift.

6. Transportcontainer (1) nach einem der vorhergehenden Ansprüche, **dadurch gekennzeichnet, dass** der Zwischenboden (4) wenigstens eine Griffaussparung (21) aufweist.

7. Transportcontainer (1) nach einem der vorhergehenden Ansprüche, **dadurch gekennzeichnet, dass** der Zwischenboden (4) mit einem zur Verstärkung vorgesehenen Einlegeteil (22) versehen ist.

8. Transportcontainer (1) nach Anspruch 7, **dadurch gekennzeichnet, dass** der Zwischenboden (4) einen mehrschaligen Aufbau mit einer Innenschale (15) und einer Außenschale (16) aufweist, wobei das Einlegeteil (22) zwischen der Innenschale (15) und der Außenschale (16) angeordnet in den Zwischenboden (4) integriert ist.

9. Transportcontainer (1) nach einem der vorhergehenden Ansprüche, **dadurch gekennzeichnet, dass** mehrere in Längsrichtung (X) des Containervolumens (V) auf gleicher Höhe fluchtend nebeneinander angeordnete Zwischenböden (4) vorgesehen sind.

## Claims

1. Transport container (1) comprising a pallet base (2) and a folding-wall ring (3), which can be transferred between a folded-flat state and an unfolded functional state, in which the folding-wall ring (3) is supported on the pallet base (2) to form a container volume (V) delimited by side walls (8, 9, 10, 11), and comprising at least one intermediate base (4), which is detachably fastened to opposite side walls (8, 9) of the folding-wall ring (3) to sub-divide the container volume (V), **characterised in that** the at least one intermediate base (4) is produced in one piece from a thermoformable plastics material by means of a twin-sheet process and comprises a plurality of moulded-on fastening elements (12) which, for the purpose of fastening the intermediate base (4), engage in fastening recesses (13) formed on the side walls (8, 9).

2. Transport container (1) according to claim 1, **characterised in that** two fastening elements (12) are formed on each of the opposite side edges (17, 18) of the intermediate base (4).

3. Transport container (1) according to claim 1 or 2, **characterised in that** the fastening recesses (13) are each arranged on a bracket portion (26) countersunk into the relevant side wall (8, 9) and extend approximately vertically into the respective side wall (8, 9).

4. Transport container (1) according to claim 3, **characterised in that** the bracket portions (26) are each countersunk into the respective side wall (8, 9) by a recessing depth that increases over a height of the container volume (V) from top to bottom.

5. Transport container (1) according to claim 3 or 4, **characterised in that** the fastening elements each comprise a support portion (27) and a hook portion (28), the support portion (27) being supported on a support edge (29) of the respective bracket portion (26), and the hook portion (28) interlockingly engaging in the respective fastening recess (13).

6. Transport container (1) according to any of the preceding claims, **characterised in that** the intermediate base (4) comprises at least one handle recess (21).

7. Transport container (1) according to any of the preceding claims, **characterised in that** the intermediate base (4) is provided with an insert part (22) intended for reinforcement.

8. Transport container (1) according to claim 7, **characterised in that** the intermediate base (4) has a multi-shell structure, with an inner shell (15) and an outer shell (16), the insert part (22) being integrated in the intermediate base (4) so as to be arranged between the inner shell (15) and the outer shell (16).

9. Transport container (1) according to any of the preceding claims, **characterised in that** a plurality of intermediate bases (4) arranged to be aligned beside one another at the same height in the longitudinal direction (X) of the container volume (V) are provided.

## Revendications

1. Conteneur de transport (1) avec un fond de palette (2) et un pourtour en parois pliables (3) qui est convertible d'un état plié à plat à un état fonctionnel déplié dans lequel le pourtour en parois pliables (3) est appuyé sur le fond de palette (2), formant un volume du conteneur (V) entouré de parois latérales (8, 9, 10, 11), et avec au moins un fond intermédiaire (4) qui est fixé de manière amovible à des parois latérales (8, 9) opposées du pourtour en paroi pliables (3) afin de diviser le volume du conteneur (V), **caractérisé en ce que** ledit au moins un fond intermédiaire (4) est formé d'un seul élément au moyen d'un procédé Twin-Sheet à partir d'un matériau plastique apte à l'emboutissage profond et présente plusieurs éléments de fixation (12) moulés qui s'engagent dans des évidements de fixation (13) formés dans les parois latérales (8, 9) pour fixer le fond intermédiaire (4).

2. Conteneur de transport (1) selon la revendication 1, **caractérisé en ce que** respectivement deux éléments de fixation (12) sont formés sur des bords latéraux (17, 18) opposés du fond intermédiaire (4).

3. Conteneur de transport (1) selon la revendication 1 ou 2, **caractérisé en ce que** les évidements de fixation (13) sont disposés respectivement sur une section de console (26) matricée dans la paroi latérale (8, 9) respective et s'étendent quasiment verticalement dans la paroi latérale (8, 9) respective.

4. Conteneur de transport (1) selon la revendication 3, **caractérisé en ce que** les sections de console (26) sont matricées dans la paroi latérale (8, 9) respective avec une profondeur de matriçage croissante de haut en bas sur une hauteur du volume du conteneur (V).

5. Conteneur de transport (1) selon la revendication 3 ou 4, **caractérisé en ce que** les éléments de fixation présentent respectivement une section d'appui (27) et une section crochet (28), sachant que la section d'appui (27) est appuyée sur un bord d'appui (29) de la section de console (26) respective, et sachant que la section crochet (28) s'engage par complémentarité de forme dans l'évidement de fixation (13) respectif.

6. Conteneur de transport (1) selon l'une des revendications précédentes, **caractérisé en ce que** le fond intermédiaire (4) présente au moins un évidement de préhension (21).

7. Conteneur de transport (1) selon l'une des revendications précédentes, **caractérisé en ce que** le fond intermédiaire (4) est pourvu d'une pièce d'insertion (22) prévue pour la consolidation.

8. Conteneur de transport (1) selon la revendication 7, **caractérisé en ce que** le fond intermédiaire (4) présente une structure à plusieurs coques avec une coque intérieure (15) et une coque extérieure (16), sachant que la pièce d'insertion (22) est intégrée au fond intermédiaire (4), disposée entre la coque intérieure (15) et la coque extérieure (16).

9. Conteneur de transport (1) selon l'une des revendications précédentes, **caractérisé en ce que** sont prévus plusieurs fonds intermédiaires (4) disposés juxtaposés, alignés à la même hauteur, dans le sens longitudinal (X) du volume du conteneur (V).
